# EUROPÄISCHE PATENTSCHRIFT

(11) **EP 1 216 451 B1**
(45) Veröffentlichungstag und Bekanntmachung des Hinweises auf die Patenterteilung: **13.08.2003**
(21) Anmeldenummer: 00966049.9
(22) Anmeldetag: 18.09.2000
(51) Int. Cl.: G06K 9/00

(54) **VORRICHTUNG ZUR FINGERERKENNUNG**
DEVICE FOR FINGER RECOGNITION
DISPOSITIF DE RECONNAISSANCE DIGITALE

(30) Priorität: 17.09.1999 DE 19944755
(43) Veröffentlichungstag der Anmeldung: 26.06.2002
(73) Patentinhaber: Fingerpin AG, 8053 Zürich (CH)
(72) Erfinder: MÜLLER, Markus, R., CH-8053 Zürich (CH)
(74) Vertreter: Lucht, Silvia
(86) Internationale Anmeldenummer: EP0009120
(87) Internationale Veröffentlichungsnummer: WO01022349

(56) Entgegenhaltungen:
- US-A- 5 195 145
- DRAKE M D ET AL: "WAVEGUIDE HOLOGRAM FINGERPRINT ENTRY DEVICE" OPTICAL ENGINEERING,US,SOC. OF PHOTO-OPTICAL INSTRUMENTATION ENGINEERS. BELLINGHAM, Bd. 35, Nr. 9, 1. September 1996 (1996-09-01), Seiten 2499-2505, XP000633939 ISSN: 0091-3286
- FUKUZUMI S: "DISCRIMINATION OF LIVING BODY FINGERS BY USING EMG AND FINGER PULSE VOLUME" DESIGN OF COMPUTING SYSTEMS: COGNITIVE CONSIDERATIONS. PROCEEDINGS OF THE INTERNATIONAL CONFERENCE ON HUMAN-COMPUTER INTERACTIONS. PROCEEDINGS OF THE HCI INTERNATIONAL. INTERNATIONALCONFERENCE ON HUMAN COMPUTER INTERACTIONS JOINTLY WITH SYMPOSIUM ON , 1997, Seiten 575-578, XP000856651

## Beschreibung

Die Erfindung geht aus von einem Fingererkennungssensor nach dem Oberbegriff des Anspruchs 1.

Derartige Vorrichtungen werden eingesetzt, um die Identität einer Person zu ermitteln und zu überprüfen. Dies ist beispielsweise bei der Vergabe von Zugriffs- und Zugangsberechtigungen notwendig und findet bei Bankautomaten, Computerarbeitsplätzen, Zugängen zu Betrieben, Sicherheitsbereichen oder Schließfächern, Anwendung. Im Unterschied zu bekannten Vorrichtungen, bei denen ein Benutzer sich über einen Ausweis, eine Chipkarte mit der ohne persönliche Identifikationsnummer (PIN) oder einen Paßwort zu erkennen gibt, wird die Identität einer Person mit Hilfe einer Vorrichtung zur Fingererkennung über charakteristische Merkmale des Fingers, insbesondere der Haut an der Fingerspitze nachgewiesen. Hierzu ist die Vorrichtung zur Fingererkennung mit einem Fingererkennungssensor ausgestattet. Dieser Sensor ermittelt die charakteristischen Merkmale des Fingers beispielsweise mit optischen Mitteln oder mit Hilfe von Halbleitern oder Lasern. Die Erfassung erfolgt zum Beispiel optisch, thermisch, kapazitiv oder durch Änderung eines Magnetfeldes.

Hierzu muss der Finger auf den Sensor oder auf ein den Sensor umgebendes Gehäuse aufgelegt, aufgedrückt oder abgerollt werden. Als nachteilig erweist sich hierbei, dass der Sensor oder das Gehäuse des Sensors durch das Auflegen und Aufdrücken des Fingers verunreinigt wird. Auf diese Weise können nicht nur Krankheiten übertragen werden, sondern es kann eine so starke Verschmutzung erfolgen, dass der Fingererkennungssensor keine Informationen mehr aufnehmen kann. Um dies auszuschließen, muss der Sensor oder das Gehäuse des Sensors in regelmäßigen Abständen gereinigt werden. Darüberhinaus ist eine Manipulation der Vorrichtung zur Fingererkennung möglich. Der auf dem Sensor oder dem Gehäuse des Sensors hinterlassene Fingerabdruck kann durch nichtberechtigte Personen ermittelt und mißbraucht werden. Außerdem kann der Sensor durch bewußte oder unbewußte Beeinflußung beschädigt werden und dadurch unbrauchbar gemacht werden. Schließlich ist durch das Auflegen und Aufdrücken des Fingers die Anzahl der von der Fingerfläche zu entnehmenden Informationen auf den aufgelegten Bereich beschränkt. Seitliche Bereiche können auf dieser Weise nicht erfasst werden.

U. S. Patent Nr. 5 195 145 offenbart eine Vorrichtung zur Fingererkennung, in dem der Finger auf einem Gehäuse über schlitzförmige Öffnungen geführt wird, durch die ein Sensor die charakteristischen Merkmale des Fingers erfaßt. Ein Ausführungsbeispiel dieser Vorrichtung entält insbesondere eine Führungsvorrichtung, die die exakte Positionierung und Bewegung des Fingers kontrolliert.

Gegenüber den genannten Vorrichtungen hat die erfindungsgemäße Vorrichtung mit den kennzeichnenden Merkmalen des Anspruchs 1 den Vorteil, dass der Fingererkennungssensor die charakteristischen Merkmale des Fingers erfasst, ohne dass der Finger hierzu auf den Fingererkennungssensor oder das Gehäuse aufgelegt werden muss. Die Erfassung erfolgt berührungslos. Eine Verunreinigung des Sensors oder des Gehäuses des Sensors wird dadurch vermieden. Außerdem können keine Krankheiten auf die Benutzer übertragen werden. Die Möglichkeiten einer Manipulation sind auf dieser Weise stark eingeschränkt. Darüber hinaus kann ein wesentlich größerer Bereich des Fingers durch den Sensor erfasst werden, wodurch die Anzahl der auszuwertenden charakteristischen Merkmale erhöht wird.

Zur Erfassung der Daten kann der Finger entweder an einer vorgegebenen Position in Ruhe angeordnet werden. Als weitere Möglichkeit kann der Finger über eine vorgebene Position hinwegbewegt werden und die Aufnahme erfolgt während der Bewegung des Fingers. Werden mehrere Fingererkennungssensoren nebeneinander eingesetzt, so kann die Aufnahme nicht nur an einem Punkt sondern entlang einer Strecke erfolgen.

Nach einer vorteilhaften Ausgesstaltung der Erfindung ist der Fingererkennungssensor ein optischer Sensor. Die Informationen werden dabei über eine Kamera oder ein Kamerasystem, beispielsweise über eine CCD- oder eine MOS-Kamera erfasst. Besonders geeignet sind Sensoren, die nicht nur eine sondern mehrere Aufnahmen des Fingers erstellen und aus diesen Aufnahmen die jeweils scharf abgebildeten Bereiche bestimmen. Die Aufnahmen können bereits beim Annähren des Fingers an den Fingererkennungssensor und beim Entfernen des Fingers vom Fingererkennungssensor erstellt werden. Je nach Abstand zwischen Finger und Fingererkennungssensor sind unterschiedliche Bereiche des Fingers scharf abgebildet. Im Unterschied zu bekannten Vorrichtungen, bei denen nur dann eine Aufnahme des Fingers erstellt wird, wenn dieser in einem fest vorgegebenen Abstand zum Fingererkennungssensor angeordnet ist, so ist es bei derartigen Vorrichtungen zur Mehrbildaufnahme wünschenswert, dass der Abstand zwischen Finger und Fingererkennungssensor während den Aufnahmen verändert wird.

Nach einer weiteren vorteilhaften Ausgestaltung der Erfinung ist der Fingererkennungssensor im infraroten Wellenlängenbereich aktiv. Mit Hilfe eines Infrarotsensors, beispielsweise einer Infrarotkamera, können Wärmebilder des Fingers erstellt werden.

Nach einer weiteren vorteilhaften Ausgestaltung der Erfindung ist als Fingererkennungssensor ein kapazitiver Sensor vorgesehen.

Nach einer weiteren vorteilhaften Ausgestaltung der Erfindung ist eine Positioniervorrichtung zur exakten Positionierung des Fingers bezüglich des Fingererkennungssensors vorgesehen. Dadurch erhält der Benutzer eine Anzeige oder eine Anleitung, an welchen Ort er den Finger positionieren oder über welchen Ort er den Finger hinwegbewegen muss, damit der Fingererkennungssensor den Finger erfassen kann. Dies ist insbesondere bei Vorrichtungen zur berührungslosen Erfassung des Fingers notwendig, da in diesem Fall der Finger nicht auf einen Sensor oder ein den Sensor umgebendes Gehäuse aufgelegt werden kann, welches an der entsprechenden Stelle markiert ist. Die Positioniervorrichtung kann aktiv oder passiv arbeiten. Das bedeutet, sie kann entweder dem Benutzer lediglich anzeigen in welchem Bereich er seinen Finger positionieren soll oder sie kann die tatsächliche Position des Fingers erfassen und den Benutzer darüber informieren, ob eine exakte Positionierung bereits vorliegt oder ob die Position verändert werden muss. Um den Benutzer den Ort anzuzeigen an oder über den er seinen Finger führen muss, weist die Positionierungsvorrichtung eine Zeigevorrichtung auf. Die Zeigevorrichtung enthält beispielsweise mechanische Begrenzungskörper, die den Bereich des Fingers eingrenzen, oder eine Lichtquelle, welche lediglich den interessierenden Bereich beleuchtet. Hierzu kann auch Licht in unterschiedlichen Farben eingesetzt werden.

Nach einer weiteren vorteilhaften Ausgestaltung der Erfindung weist die Positionierungsvorrichtung einen Geber zur Erfassung der Position des Fingers und eine den Benutzer über die Position des Fingers informierende Ausgabevorrichtung auf. Zusätzlich kann eine Zeigevorrichtung vorgesehen sein, welche den Benutzer zunächst über den Erkennungsbereich informiert. Bei dem Geber kann es sich beispielsweise um eine Lichtschranke handeln. Wird die Lichtschranke nicht durch den Finger durchbrochen, so erhält der Benutzer ein akustisches oder optisches Signal, was ihn dazu veranlaßt, die Position des Fingers zu verändern. Die Position des Fingers wird solange geändert bis die Lichtschranke durchbrochen wird.

In diesem Fall wird der Benutzer darüber informiert, dass eine exakte Positionierung nunmehr erreicht ist.

Nach einer weiteren vorteilhaften Ausgestaltung der Erfindung umfasst die Positionierungsvorrichtung als Zeigevorrichtung und/oder als Ausgabevorrichtung eine Lichtquelle, eine Schallquelle oder mechanische Begrenzungsvorrichtungen. Es können auch Kobinationen aus einem oder mehrerer dieser Vorichtungen vorgesehen sein. Als mechanische Begrenzungsvorrichtung kann beipielsweise ein horizontal oder vertikal angeordneter Bügel dienen, der optional mit Lichtquellen ausgestattet ist. Der Benutzer wird dazu angeleitet, den Finger entlang der Symetrieachse des Bügels einzuführen und darauf zu achten, dass zwischen dem Bügel und dem Finger an jeder Seite ein Abstand steht. Andere Formen mechanischer Begrenzungskörper, wie beispielsweise Schienen sind ebenfalls möglich. Vorteilhafterweise findet keine Berührung zwischen dem Finger und dem Begrenzungskörper statt, da in diesem Fall wiederrum die Gefahr von Verunreinigungen oder der Übertragung von Krankheiten gegeben ist.

Nach einer weiteren vorteilhaften Ausgestaltung der Erfindung weist die Begrenzungsvorrichtung einen Lebendtestsensor auf, welcher die Durchblutung oder den Pulsschlag des Fingers erfasst. Auf diese Weise wird gewährleistet, dass der Fingererkennungssensor nicht durch Nachbildungen eines Fingers manipuliert werden kann. Bei derartigen Sensoren kann es sich beispielsweise um einen Piezo-Sensor handeln, der die Durchblutung des Fingers anhand des Dopplereffektes ermittelt.

Weitere Vorteile und vorteilhafte Ausgestaltung der Erfindung sind der nachfolgenden Beschreibung der Zeichnungen und den Ansprüchen entnehmbar.

In der Zeichnung ist ein Ausführungsbeispiel der Erfindung dargestellt und im folgenden näher beschrieben. Es zeigen:
- Figur 1:: Perspektivische Darstellung einer Vorrichtung zur Fingererkennung
- Figur 2:: Positioniervorrichtung der Vorrichtung zur Fingererkennung gemäß Figur 1 in einer Ansicht von oben.

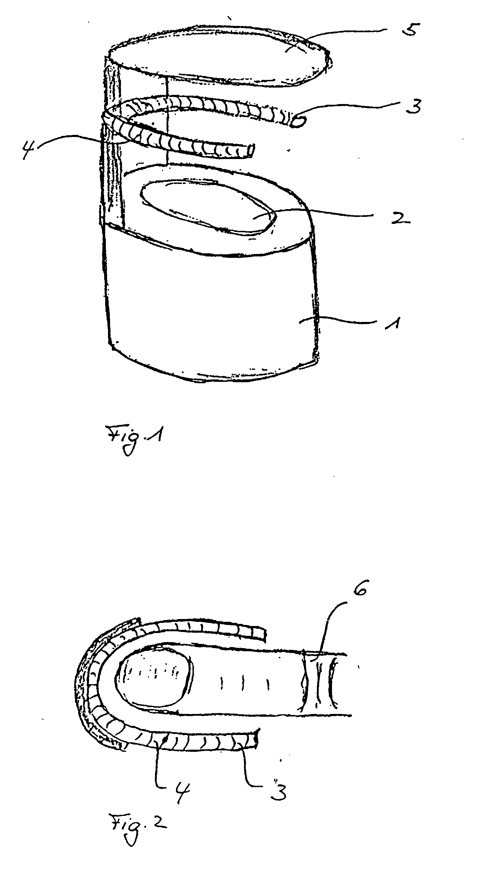

In Figur 1 ist eine Vorrichtung zur Fingererkennung mit einem in der Zeichnung nicht dargestellten durch ein Gehäuse 1 umschlossenen Fingererkennungssensor dargestellt. Der Fingererkennungssensor ist im Bereich 2 des Gehäuses 1 angeordnet. In einem gewissen Abstand zum Gehäuse 1 befindet sich eine bügelartige Positionierungsvorrichtung 3, welche mit Lichtquellen 4 ausgestattet ist. Eine Blende 5 über der Positioniervorrichtung schützt den Fingererkennungssensor gegen Einflüsse von oben, insbesondere auch gegen den Einfall von Streulicht. Damit der Fingererkennungssensor einen Finger erfassen kann, muss der Finger in die bügelartige Positionierungsvorrichtung 3 so eingeführt werden, dass er, wie in Figur 2 dargestellt, entlang der Symmetrieachse der Vorrichtung angeordnet ist und nach allen Seiten einen Abstand zur Positioniervorrichtung aufweise. Durch in der Zeichnung nicht dargestellte Geber kann diese Position erfasst und die exakte bzw. mangelhafte Positionierung durch die Lichtquellen 4, beispielsweise in unterschiedlicher Farbe, angezeigt werden.

## Patentansprüche

1. Vorrichtung zur Fingererkennung
mit einem Fingererkennungssensor und
mit einem den Fingererkennungssensor zumindest teilweise umschließenden Gehäuse (1),
mit einem Fingererkennungssensor, welcher die charakteristischen Merkmale des Fingers erfaßt, wobei zwischen dem Fingererkennungssensor und dem Finger und/ oder zwischen dem Gehäuse (1) und dem Finger ein Abstand besteht,
mit einer Positionierungsvorrichtung (3) zur exakten Positionierung des Fingers bezüglich des Fingererkennungssensors,
**dadurch gekennzeichnet,**
**daß** als Positionierungsvorrichtung ein Geber zur aktiven Erfassung der Position des Fingers und eine den Benutzer über die Position des Fingers informierende Ausgabevorrichtung vorgesehen sind.

2. Vorrichtung nach Anspruch 1, **dadurch gekennzeichnet, daß** als Ausgabevorrichtung der Positionierungsvorrichtung (3) Lichtquellen (4) vorgesehen sind.

3. Vorrichtung nach Anspruch 1, **dadurch gekennzeichnet, daß** als Ausgabevorrichtung der Positionierungsvorrichtung (3) Schallquellen vorgesehen sind.

4. Vorrichtung nach einem der vorhergehenden Ansprüche, **dadurch gekennzeichnet, daß** der Fingererkennungssensor ein optischer Sensor ist.

5. Vorrichtung nach einem der Ansprüche 1 bis 3, **dadurch gekennzeichnet, daß** der Fingererkennungssensor im infraroten Wellenlängenbereich aktiv ist.

6. Vorrichtung nach einem der Ansprüche 1 bis 3, **dadurch gekennzeichnet, daß** der Fingererkennungssensor ein kapazitiver Sensor ist.

7. Vorrichtung nach einem der vorhergehenden Ansprüche, **dadurch gekennzeichnet, daß** eine Zeigevorrichtung vorgesehen ist, welche dem Benutzer den Ort anzeigt, an dem der Finger vorbeizuführen oder zu positionieren ist.

8. Vorrichtung nach Anspruch 7, **dadurch gekennzeichnet, daß** als Zeigevorrichtung Lichtquellen vorgesehen sind.

9. Vorrichung nach Anspruch 7, **dadurch gekennzeichnet, daß** als Zeigevorrichtung Schallquellen vorgesehen sind.

10. Vorrichtung nach Anspruch 7, daß die Zeigevorrichtung mechanische Begrenzungsvorrichtungen oder Begrenzungskörper aufweist.

11. Vorrichtung nach Anspruch 10, **dadurch gekennzeichnet, daß** die Begrenzungsvorrichtung aus einem horizontal oder vertikal angeordneten Bügel (3) besteht.

12. Vorrichtung nach Anspruch 10, **dadurch gekennzeichnet, daß** die Begrenzungsvorrichtung aus einer horizontal oder vertikal angeordneten Schiene besteht

13. Vorrichtung nach Anspruch 10, 11 oder 12, **dadurch gekennzeichnet, daß** die Begrenzungsvorrichtung einen Lebend-Test-Sensor aufweist, welcher die Durchblutung oder den Pulsschlag des Fingers erfaßt.

## Claims

1. Device for finger recognition, with a finger recognition sensor and a housing (1) surrounding the finger recognition sensor at least partially, with a finger recognition sensor which captures the characteristic features of the finger, whereby between the finger recognition sensor and the finger and/or between the housing (1) and the finger there is a gap, with a positioning device (3) for the exact positioning of the finger in relation to the finger recognition sensor, **characterized in that** a transmitter for active capture of the position of the finger and an output device informing the user of the position of the finger are provided to act as the positioning device.

2. Device according to claim 1, **characterized in that** light sources (4) are provided as the output device of the positioning device (3).

3. Device according to claim 1, **characterized in that** sound sources are provided as the output device of the positioning device (3).

4. Device according to one of the previous claims, **characterized in that** the finger recognition sensor is an optical sensor.

5. Device according to one of claims 1 to 3, **characterized in that** the finger recognition sensor is active in the infra red wavelength range.

6. Device according to one of claims 1 to 3, **characterized in that** the finger recognition sensor is a capacitive sensor.

7. Device according to one of the previous claims, **characterized in that** a pointing device is provided which shows the user the point at which the finger is to be led past or positioned.

8. Device according to claim 7, **characterized in that** light sources are provided to act as the pointing device.

9. Device according to claim 7, **characterized in that** sound sources are provided to act as the pointing device.

10. Device according to claim 7, **characterized in that** the pointing device manifests mechanical limiting devices or limiting elements.

11. Device according to claim 10, **characterized in that** the limiting device consists of a horizontally or vertically arranged bow (3).

12. Device according to claim 10, **characterized in that** the limiting device consists of a horizontally or vertically arranged rail.

13. Device according to claim 10, 11 or 12, **characterized in that** the limiting device has a life test sensor which captures the blood flow or pulse beat of the finger.

## Revendications

1. Dispositif de reconnaissance digitale équipé d'un capteur de reconnaissance digitale et d'un boîtier (1) entourant au moins partiellement le capteur de reconnaissance digitale, ce capteur de reconnaissance digitale enregistrant les propriétés caractéristiques du doigt et un espacement se trouvant entre le capteur de reconnaissance digitale et le doigt et/ou entre le boîtier (1) et le doigt, d'un dispositif de positionnement (3) pour le positionnement exact du doigt par rapport au capteur de reconnaissance digitale, **caractérisé en ce que**, comme dispositif de positionnement, il est prévu un transmetteur pour la reconnaissance active de la position du doigt et un dispositif de sortie informant l'utilisateur sur la position du doigt.

2. Dispositif selon la revendication 1, **caractérisé en ce que** des sources lumineuses (4) sont prévues comme dispositif de sortie du dispositif de positionnement (3).

3. Dispositif selon la revendication 1, **caractérisé en ce que** des sources sonores sont prévues comme dispositif de sortie du dispositif de positionnement (3).

4. Dispositif selon l'une quelconque des revendications précédentes, **caractérisé en ce que** le capteur de reconnaissance digitale est un capteur optique.

5. Dispositif selon l'une quelconque des revendications 1 à 3, **caractérisé en ce que** le capteur de reconnaissance digitale est actif dans la plage de longueur d'onde infrarouge.

6. Dispositif selon l'une quelconque des revendications 1 à 3, **caractérisé en ce que** le capteur de reconnaissance digitale est un capteur capacitif.

7. Dispositif selon l'une quelconque des revendications précédentes, **caractérisé en ce qu'**il est prévu un dispositif indicateur qui montre à l'utilisateur l'emplacement où le doigt doit être placé ou positionné.

8. Dispositif selon la revendication 7, **caractérisé en ce que** des sources lumineuses sont prévues comme dispositif indicateur.

9. Dispositif selon la revendication 7, **caractérisé en ce que** des sources sonores sont prévues comme dispositif indicateur.

10. Dispositif selon la revendication 7, **caractérisé en ce que** le dispositif indicateur présente des dispositifs ou des corps de délimitation mécaniques.

11. Dispositif selon la revendication 10, **caractérisé en ce que** le dispositif de délimitation se compose d'un étrier (3) disposé horizontalement ou verticalement.

12. Dispositif selon la revendication 10, **caractérisé en ce que** le dispositif de délimitation se compose d'un rail disposé horizontalement ou verticalement.

13. Dispositif selon la revendication 10, 11 ou 12, **caractérisé en ce que** le dispositif de délimitation présente un détecteur de vie, qui enregistre la circulation sanguine ou le pouls du doigt.
